# EUROPEAN PATENT SPECIFICATION

(11) **EP 1 014 017 B1**
(45) Date of publication and mention of the grant of the patent: **01.09.2004**
(21) Application number: 99125360.0
(22) Date of filing: 20.12.1999
(51) Int. Cl.: F25D 23/00, F16K 17/02

(54) **A pressure-balancing valve, fitted with a means of protection against low temperatures, for cold-storage rooms**
Druckausgleichendes Ventil mit Niedertemperaturschutzmitteln für Kaltlagerräume
Soupape d'équilibrage de pression avec des moyens de protection contre des températures basses pour des chambres d'entreposage frigorifique

(30) Priority: 22.12.1998 IT AN980057
(43) Date of publication of application: 28.06.2000
(73) Proprietor: Merloni Elettrodomestici S.p.A., 60044 Fabriano (AN) (IT)
(72) Inventor: Mariani, Pietro, 60044 Fabriano (Ancona) (IT); Cappelletti, Domenico, 62024 Esanatoglia (Macerata) (IT)

(56) References cited:
- EP-A- 0 030 046
- EP-A- 0 848 217
- DE-A- 3 045 599
- US-A- 2 699 044
- US-A- 3 813 896
- US-A- 3 826 106
- US-A- 4 235 162
- US-A- 4 569 208
- US-A- 5 836 170

## Description

The present invention relates to a device for balancing the pressure difference between the interior and the exterior of an airtight room, the said device being particularly suitable for use in cold-storage rooms or household freezers. The main characteristic of the invention lies in the fact that the said devices are envisaged to prevent the temperature of the interception component being affected by the low temperatures inside the cold-storage room.

Hereafter, the term 'room' or 'cold-storage room' will be used for any refrigerating cupboard or room or freezer, in particular those used as household appliances. In cold-storage rooms, any hot or humid air entering from the exterior, increases the consumption and the formation of frost. For this reason, the door is sealed in the best way possible using a suitable sealant strip. If however, the room is perfectly airtight, with each cooling cycle the air pressure drops in such a way that it becomes very difficult or impossible to open the door. Even in the absence of a depression, if the room is perfectly airtight, the door will still be resistant to a certain extent if attempts are made to open it.

A simple communication duct from the interior to the exterior is all that is needed to balance the pressure but this does not prevent the continuous inflow of hot and humid air caused by convection: exactly what the sealant strips are intended for. It is necessary therefore to envisage devices composed of check components which allow the pressure to be balanced while preventing the useless air exchanges. To achieve this aim there are many means which prevent convective motion but not the flow of air pushed by a slight pressure difference. To reduce to a minimum the external air taken in, at each door shutting, which acts like a bellows in a certain sense, it is preferable that these components are composed of a unidirectional valve through which the air can enter but not leave the cold-storage room. In this way, when the door is closed, the majority of the air moved, not being able to pass through the valve, leaks from the edges of the door itself rather than entering the room.

The document EP 0 848 217 shows a bi-directional valve made by a light plug that allows the air to come in from the outside sucked by the cold storage room and drainage water to go out. The document does not foresees any way to prevent the plug to ice in its site neither any prevention is nor indicated neither possible in US 5 836 170.

The document EP 0 030 046 envisages basically a connecting channel between the exterior and the room, the said channel being obstructed by oscillating gates which block the convection motion but permit the airflow due to pressure differences. The drawback of this system is that it is difficult to clean and subject to clogging by the formation of frost, in particular on the most internal gates. It is then unlikely that such a complex solution can be use also in household freezers. The European Patent n° 494587 envisages a waterproof bag being placed outside the room but connected to it to absorb the variations in the volume of the internal air. This prevents the humidity entering but not the air at external temperature. The drawback of this system is that the device is bulky and can easily become a receptacle for bacteria since its cleaning is almost impossible.

An apparently very simple device is disclosed by patent DE 3 045 559 A. In reality, the correct functioning of the said device requires a careful adjustment of the position of a shutter which opens and closes in exact relation to the slight pressing and releasing of the door sealant strip.

On US 3 813 896, US 4 569 208, US 3 826 106 the icing of the valves or of the ducts connected to them is prevented by electric heating systems.

Other extremely simple, commonly-known techniques are based on unidirectional valves which block any possible air exchanges caused by natural circulation but also allow the air to enter in the event of a slight pressure difference. The interception components are generally composed of different shaped, flexible membranes installed inside the cavity connecting the external environment and the internal one. Usually, for ease of construction, these devices are inserted into one of the walls in the room. The drawback comes then from the fact that the membrane, affected by the internal temperature, cools so much that it jams, either because it has lost it elasticity or because it has been covered with frost, especially if it is exposed to the low temperatures of a freezer. One way of overcoming this drawback is to place the membrane valve outside the wall and to connect it to the room using a duct long enough to prevent the transmission of the internal low temperatures, as in patent DE 19 532 182 A1. The drawback of this system is that the device then becomes bulky, complicated to install and inaccessible for cleaning.

The aim of the present invention is to solve the problems of the commonly known technique and overcome the drawbacks described above by means of a device which balances the pressure inside a cold-storage room and which can be connected to any wall of the room itself but in which the air interception component is protected and not affected by the low temperatures of the room, although the said device is installed in extremely close proximity to the room itself.

A further aim of the present invention is to make available a compact valve and its connecting duct between the external and internal wall sides of a refrigerating room.

A still further aim of the present invention is to make it possible for the user to easily install, inspect and clean all the components of the valve.

These aims and others are achieved in general by a device object of the present invention in which the connection between the interior and the exterior of the room necessary for the balancing of the pressure is envisaged by the insertion of insulating material which prevents any transfer of heat via conduction and convection according to the claims that follow. Further characteristics and advantages of the present invention will better emerge from the detailed description of the pressure-balancing device that follows, with reference to the accompanying figures, in the form of some preferred but not limiting embodiments, in which:
figure 1, having for increased clarity omitted the parts which do not concern the present invention, represents, according to a preferred embodiment, a longitudinal section of the device according to the invention installed on a vertical wall of the cold-storage room using a check membrane valve to intercept the airflow, i.e. a unidirectional valve;
figure 2, according to view A-A of fig. 1, shows the body of the unidirectional valve;
figure 3, according to view B-B of fig. 1, shows the bottom of the duct connecting the interior of the cold-storage room with the exterior;
figure 4, according to an different embodiment of the present invention, represents a longitudinal section of the device according to the invention, installed on the floor of the cold-storage room and also using a unidirectional membrane valve to intercept the airflow;
figure 5, according to a still further embodiment, represents a longitudinal section of the device according to the present invention, installed on the floor of the cold-storage room and using a unidirectional membrane valve composed of a sphere placed on a special seating to intercept the airflow.

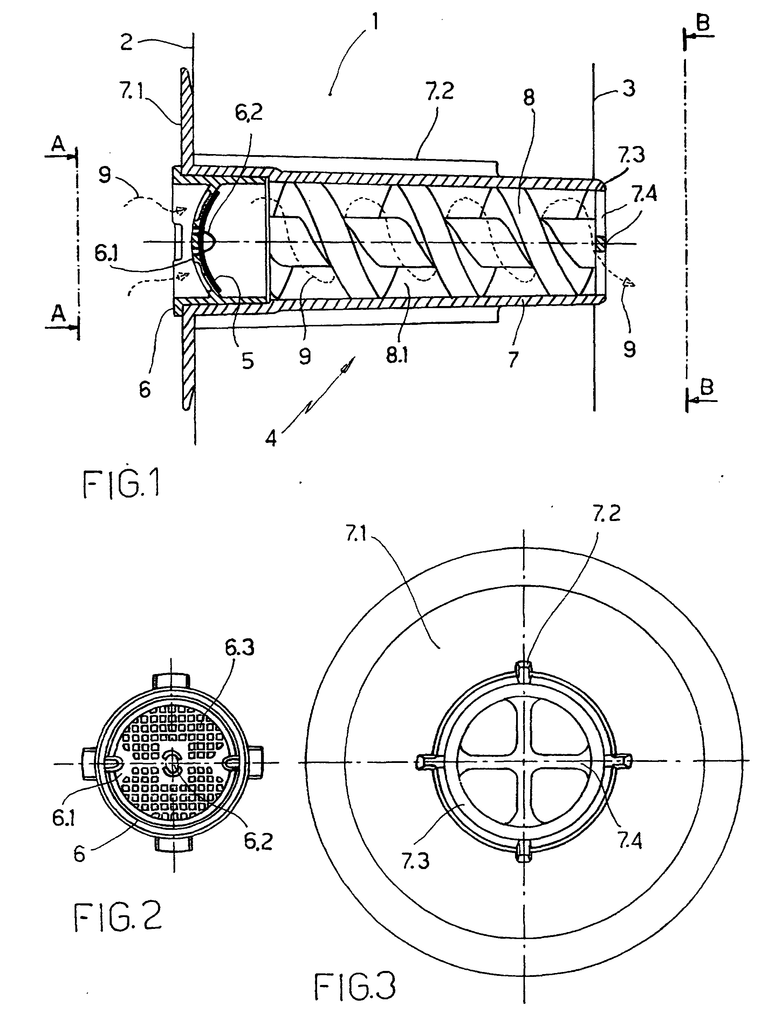

With particular reference to figure 1:
1 indicates any vertical wall of a cold-storage room, composed substantially of insulation material;
2 indicates the external surface of the wall 1;
3 indicates the internal surface of the wall 1;
4 indicates the pressure-balancing valve according to a preferred embodiment of the present invention;
5 indicates a rubber or elastic membrane which constitutes the unidirectional air interception component;
6 indicates the body of the valve to which the membrane 5 is attached and which, in the embodiment, also functions as a filter;
   6.1 indicates the substantially cylindrical surface of the body of the valve 6 which constitutes both the filter and the support surface of the membrane 5;
   6.2 indicates a button on cylindrical surface 6.1 to which the membrane 5 is pressed into;
7 indicates the duct connecting the exterior to the cold-storage room. The following features of the duct are of note: an external flange 7.1, for aesthetic purposes and to act as a stop ledge on the surface 2; longitudinal ribbing 7.2, to attach the duct 7 to the insulating material constituting the wall 1; a bottom 7.3 crossed by one or more spokes 7.4; the side duct 7 is inserted in a cavity on the wall 1 at a substantially right-angled axis to the walls 2 and 3:
8 indicates an insertion made of insulation material, kept in contact with the internal surface of the duct 7 and tightened by the body of the valve 6 against the spoke 7.4; the said insertion 8 bearing outside one or more helicoidal channels 8.1;
9 indicates, with a series of arrows, the airflow from the exterior to the interior of the cold-storage room;

With particular reference to figure 2, the holes 6.3 in the body of the valve 6 are shown, the said holes constituting the filter.

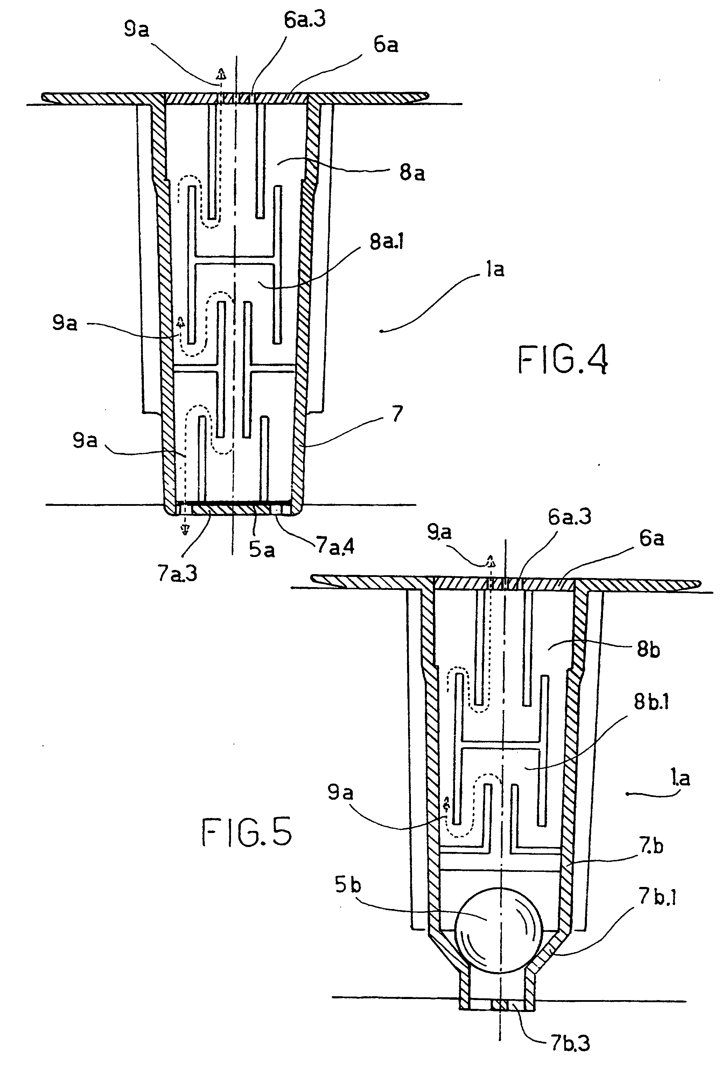

In figure 3 the following items of the duct 7 are shown, according to the view B-B of fig.1: the external flange 7.1, the longitudinal ribbing 7.2 and the spokes 7.4 crossing the bottom 7.3.

In figure 4 1a indicates the bottom of the cold-storage room while 8a indicates the insulating material insert in which are obtained the channels 8a.1, with alternating up-flow and down-flow sections. 9a indicates the airflow permitted and 5a indicates an elastic membrane pushed down by the insert 8a against the bottom 7a.3 with holes 7a.4. The insert 8a is held, in its turn, by the cover 6a in which there are holes 6a.3.

In figure 5, 1a indicates the bottom of the cold-storage room, with the duct 7b connecting the cold-storage room to the exterior with air passage holes 7b3. Housed inside the said duct 7b are a gravity-driven shutter 5b, in this case sphere-shaped, resting in a seating 7b.1, and an insulating material insert 8b, identical to the insulating material insert 8a, fitted with channels 8b.1 with alternating up-flow and down-flow sections.

With reference to figures 1, 2 and 3, wherein it is not necessary to question to construction methods and the functioning of the interception component composed of the membrane 5 and the body of the valve 6, since these are commonly-known means, it is obvious that when the membrane 5 adheres to its seating, i.e. the cylindrical surface 6.1, all air and humidity exchange between the interior and the exterior caused by convection is prevented.

Whenever a vacuum in the cold-storage room arises, either because the door has been opened or as a result of the cooling of the air contained in the cold-storage room, the membrane 5 rises up from its resting position on the cylindrical surface 6.1, thus permitting the external air to enter in accordance with the flow direction indicated by the arrow 9. The air cannot flow in the opposite direction, the embodiment having envisaged a unidirectional valve, although this is not relevant for the purposes of the invention. It should be noted rather that the duct 7 is substantially the same length as the thickness of the wall 1, the route of the air inside it being distinctly longer than the thickness of the said wall 1 since the air is forced to flow through al the helicoidal channels 8.1.

If the duct 7 did not have the insert 8, the body of the valve 6 and the membrane 5 would be slightly affected by the temperatures outside the cold-storage room, especially if it is a freezer, because of convection, even if only inside the said duct 7, and of the simple conduction of the heat through the trapped air in the said duct 7. The aforementioned components 5 and 6 would then, as happens with devices of this type, reach temperature levels low enough far to cause the membrane 5 to become rigid and/or the said membrane and the shutter of the holes 6.3 to lock because of the frost formed.

On the contrary, the presence of the insert 8 substantially prevents any cooling of the membrane 5 and the body of the valve 6 thanks to the cold-storage room and therefore the said components 5 and 6 remain substantially at the temperature of the external environment to which they are exposed. In fact:
- because of the winding nature of the channels 8.1 any convective motion inside the duct 7 is obstructed since the warmer air remains trapped in the higher loops of the channels 8.1 and the colder air in the lower loops, excluding any possibility of natural circulation;
- a significant amount of heat cannot be transferred by conduction from the valve body 6 towards the cold-storage room either, neither through the air, nor along the components of the device according to the present invention since the insert 8 is composed of, as already mentioned, insulating material and since the channel 8.1 can be made distinctly longer than the width of the duct 7 in which it is contained.

It should be noted that the device just described would function just as well even if the interception component, in this embodiment the membrane 5, were realized in a different form and/or of a different material which is unaffected by low temperatures and/or the device were bi-directional, as the formation of frost would block any mechanism anyway and would obstruct the essential filter.

According to a preferred embodiment, the insert 8 is realized, following any commonly-known technique, using a simple insulating material, in particular polystyrene or another moulded resin foam, shaped like a screw trunk.

The invention just described can be mounted extremely easily on any vertical wall of the cold-storage room, although the front wall would be preferable as it provides easier access to the device. The duct 7 can actually remain attached to the wall 1 while the body of the valve 6 with the relative membrane 5 and the insert 8 can be easily removed for cleaning, since the valve body 6 can be attached to the duct 7 by any known means, not described herein, which allows it to be disassembled, for example a simple press-in joint or a threaded locking joint or a bayonet joint.

In relation to the embodiment just described, which is particularly recommended because of its construction simplicity, many variations are possible. The only necessity to maintain the advantages of this invention is that of ensuring one or more of the airflow channels are built inside the room or on the external surface of a material which is sufficiently insulating
- since the air channels are confined within the duct 7 which is substantially as long as the thickness of the wall 1
- but being the same channels sufficiently winding and comprising adjacent up-flow and down-flow sections so that any convective motion inside the duct 7 will be prevented and the said channels being long enough to make the heat transmission via the trapped air in the duct 7 itself insignificant.

The insert 8 can be, as already mentioned, composed of a screw with one or more threads, but any insulating material, even composed of several pieces assembled together within which or on whose surfaces there are channels long enough and fitted with up-flow and down-flow sections, falls within the scope of the present invention. For the sake of a further, non-limiting example, insert 8 could also be represented by an element onto which labyrinth-like routes have been printed, as in fig. 4, or of one or more tubes, preferably made of plastic, coiled up and connecting the valve body 6 to the bottom 7.3 of the duct 7; even a body made of any porous insulating material could be suitable provided that where it is applied the cleaning of the insert 8 itself is not necessary.

For example, if the installation of a second device according to the present invention is desired on the floor of the cold-storage room, it is possible to use an insert 8a as shown in fig.4 in which high and low loops are envisaged in the channels 8a.1 where the hot and cold air respectively can be trapped without the natural circulation being obstructed even though the inflow of air is prevented by the membrane 5a, which is however free to rise up to prevent the formation of a vacuum inside the cold-storage room. The embodiment illustrated in fig.4 is also suitable for installation on the upper horizontal wall of the cold-storage room simply upside down.

A further embodiment of the device according to the present invention, suitable for installation on the bottom of the cold-storage room, is shown in fig.5, a simple variation of the embodiment just described in fig. 4 except the unidirectional obstruction component is composed of a gravity-driven shutter, not necessarily made of an elastic material, resting on a seating 7b.1. The gravity-driven shutter 5b has the most suitable shape, for example spherical. The embodiments of the device according to the present invention in figures 4 and 5 can also be fitted into the vertical walls, using suitable and simple variations which it is not necessary to describe since they are within the capabilities of any technician in the skilled in the field, provided that the openings of the connections with the interior and with the exterior are made respectively low and high, and always laterally rather than on the bottom or top.

The device just described for cold-storage rooms according to the preferred embodiment has more general applications and uses since it can be envisaged in a further embodiment with unidirectional or unidirectional balancing valves, leading from the interior to the exterior, for example, if it is necessary to balance the pressure of hot chambers, such as kilns, when it is necessary at the same time to protect the said valves from the continually excessively high temperatures. Naturally, in this case, the insulating material to choose for the inserts 8, 8a or 8b must be resistant to such temperatures.

It should be noted that the hollow body which constitutes the duct 7, which acts as a container for the other components, of the device according to the present invention, is useful in the majority of applications but irrelevant for the scope of the present invention according to which it is sufficient to insert the insert 8, 8a or 8b directly into the cavity in the wall 1 or 1a. In other words, the duct 7, for the aim of the present invention, can been simply composed of a cavity created on the wall1, with a substantially right-angled axis to the surfaces 2 and 3 of the said wall 1, and not necessarily with the body inserted in the aforementioned cavity, as previously described.

To its advantage, the device which is the object of the present invention can make reliable simple valves with membrane, or other types of commonly-known and widely used shutters, preventing them from becoming rigid or blocking due to frost formation. The device is also compact, simple to manufacture and install and just as simple to disassemble for cleaning.

## Claims

1. A device to balance the pressure difference between the interior and the exterior of a substantially airlight chamber, said chamber being a cold storage room, in particular a household freezer, or a hot chamber,
said device
- comprising means of interception (5, 6, 5a, 7a.3, 7a.4, 5b, 7b.1, 7b.3), of the unidirectional or bi-directional kind,
- being installed in proximity to the external surface (2) of a wall (1; 1a) of said airtight chamber and connected to the internal surface (3) of the chamber itself through a duct (7; 7b) created in said wall (1; 1a) of said chamber,
- and being substantially confined within said external and internal surfaces (2, 3) of said wall (1; 1a)
**characterized by** the fact that it further comprises one or more static inserts (8; 8.a; 8.b)
- made of thermal insulating material,
- lodged within said duct (7; 7b),
- forming one or more open channels (8.1, 8a.1, 8b.1) along which the passage of air from/to the exterior to/from the interior of said chamber is possible when a pressure difference occurs between the inside and the outside of said room,
- said channels (8.1, 8a.1, 8b.1) being so shaped as to prevent substantially any transmission of heat from to the exterior to from the interior of said cold storage room or hot chamber through said air when no pressure differences occur between the inside and the outside of said room or chamber.

2. A pressure-balancing device according with claim 1, **characterized by** the fact that said channels (8.1, 8a.1, 8b.1) are:
- substantially longer than the thickness of the wall (1, 1a) in order to make the transmission of heat via conduction along the channels themselves insignificant;
- and arranged in winding routes with adjacent up-flow and down-flow sections and/or of a suitable shape in order to prevent convective motion inside the channels themselves.

3. A pressure-balancing device according with claims 1 or 2, **characterized by** the fact that
the insert (8) is composed of a screw trunk with one or more threads arranged around a substantially straight axis,
said pressure-balancing device is placed within a side wall (1),
and said straight axis is substantially orthogonal to the surfaces (2, 3) of said wall (1).

4. A pressure-balancing device according with claim 2, **characterized by** the fact that the said insulating material insert (8a, 8b), is composed of a body on which the channels are obtained in a labyrinthine form (8a.1, 8b.1).

5. A pressure-balancing device according with claim 2, **characterized by** the fact that said insulating material insert is composed of one or more small tubes, preferably made of plastic, coiled up and forming channels arranged in such as way as to connect the interception valve (5, 6), with the internal surface (3) of said chamber.

6. A pressure-balancing device according with according with claims 1 or 2, **characterized by** the fact that the insulating effect of the interception means can be created using as insert a porous material through whose pores the air may flow.

7. A pressure-balancing device according with whichever previous claim, **characterized by** the fact that said insulating material inserts (8, 8a, 8b), can be made of polystyrene foam.

8. A pressure-balancing device according with whichever previous claim, **characterized by** the fact that said insulating material insert (8, 8a), is fastened tightly by the body of the valve (6) or the cover (6a) onto the bottom (7.3., 7a.3) of the duct (7; 7b).

9. A pressure-balancing device according with whichever previous claim, **characterized by** the fact that the said valve body (6) or cover (6a) is fastened to the duct (7, 7b) in such a way that it can be removed, using commonly-known means, such as threaded, bayonet or press-in joints so allowing the extraction for cleaning of said insulating material insert (8, 8a, 8b).

10. A household freezer using a pressure-balancing device according to whichever of the previous claims.

## Patentansprüche

1. Vorrichtung für den Ausgleich des Druckunterschieds zwischen der Innen- und der Außenseite eines im Wesentlichen luftdichten Raums, wobei es sich bei diesem Raum um einen Kühlraum handelt, insbesondere um ein Haushaltsgefriergerät oder einen Heizraum.
Diese Vorrichtung
- mit unidirektionalen oder bidirektionalen Absperrmitteln (5, 6, 5a, 7a.3, 7a.4, 5b, 7b.1, 7b.3)
- wird in der Nähe der Außenoberfläche (2) einer Wand (1; 1a) des besagten luftdichten Raums eingebaut und ist verbunden mit der Innenoberfläche (3) des luftdichten Raums durch eine in der besagten Wand (1; 1a) des besagten Raums gebildete Leitung (7; 7b),
- und ist im Wesentlichen innerhalb der besagten Außen- und Innenoberflächen (2, 3) der besagten Wand (1; 1a) begrenzt,
**dadurch gekennzeichnet, dass** sie zudem einen oder mehrere statische Einsätze (8; 8.a; 8.b) umfasst,
- bestehend aus Thermoisoliermaterial,
- befindlich in der besagten Leitung (7; 7b),
- die einen oder mehrere offene Kanäle (8.1, 8a.1, 8b.1) bildet, durch die der Durchfluss der Luft von der/zur Außenseite von der/zur Innenseite des besagten Raums möglich ist, wenn ein Druckunterschied zwischen der Innenseite und der Außenseite des besagten Raums vorliegt,
- wobei diese Kanäle (8.1, 8a.1, 8b.1) so ausgelegt sind, dass sie im Wesentlichen jegliche Übertragung von Wärme auf die Außenseite von der Innenseite des besagten Kühlraums oder Heizraums durch besagte Luft verhindern, wenn kein Druckunterschied zwischen der Innen- und der Außenseite des besagten Raums vorliegt.

2. Druckausgleichsvorrichtung nach Anspruch 1, **dadurch gekennzeichnet, dass** diese Kanäle (8.1, 8a.1, 8b.1):
- wesentlich länger sind als die Stärke der Wand (1, 1a), damit die Wärmeübertragung durch Leitung durch die Kanäle selbst unerheblich wird;
- in Windungen mit angrenzenden aufsteigenden und absteigenden Abschnitten ausgelegt sind und/oder eine geeignete Form aufweisen, um die konvektiven Bewegungen in den Kanälen zu verhindern.

3. Druckausgleichsvorrichtung nach Anspruch 1 oder 2, **dadurch gekennzeichnet, dass**
der Einsatz (8) aus einem Schraubenhals besteht mit einem oder mehreren Gewindegängen, angeordnet um eine im Wesentlichen gerade Achse,
diese Druckausgleichsvorrichtung in einer Seitenwand (1) platziert ist
und dass diese gerade Achse im Wesentlichen im rechten Winkel zu den Oberflächen (2, 3) der besagten Wand (1) steht.

4. Druckausgleichsvorrichtung nach Anspruch 2, **dadurch gekennzeichnet, dass** dieser Isoliermaterialeinsatz (8a, 8b) aus einem Körper besteht, auf dem die Kanäle in einer Labyrinthform (8a.1, 8b.1) gebildet sind.

5. Druckausgleichsvorrichtung nach Anspruch 2, **dadurch gekennzeichnet, dass** dieser Isoliermaterialeinsatz aus einer oder mehreren kleinen gewundenen Röhren besteht, vorzugsweise aus Kunststoff, die Kanäle bilden, die so angeordnet sind, dass sie das Absperrventil (5,6) mit der Innenoberfläche (3) des besagten Raums verbinden.

6. Druckausgleichsvorrichtung nach Anspruch 1 oder 2, **dadurch gekennzeichnet, dass** die Isolierwirkung der Absperrmittel durch die Verwendung von porösem Material als Einsatz gebildet werden kann, durch dessen Poren die Luft strömen kann.

7. Druckausgleichsvorrichtung nach einem beliebigen der vorhergehenden Ansprüche, **dadurch gekennzeichnet, dass** diese Isoliermaterialeinsätze (8, 8a, 8b) aus Polystyrolschaum bestehen können.

8. Druckausgleichsvorrichtung nach einem beliebigen der vorhergehenden Ansprüche, **dadurch gekennzeichnet, dass** dieser Isoliermaterialeinsatz (8, 8a) fest durch den Körper des Ventils (6) oder die Abdeckung (6a) am Ende (7.3, 7a.3) der Leitung (7; 7b) befestigt ist.

9. Druckausgleichsvorrichtung nach einem beliebigen der vorhergehenden Ansprüche, **dadurch gekennzeichnet, dass** der besagte Ventilkörper (6) oder die Abdeckung (6a) an der Leitung (7, 7b) so befestigt ist, dass die Entfernung möglich ist, mit der Verwendung allgemein bekannter Mittel wie Gewindeverbindung, Bajonett- oder Druckverbindungen, wodurch das Abnehmen für die Reinigung des besagten Isoliermaterialeinsatzes (8, 8a, 8b) ermöglicht wird.

10. Haushaltsgefriergerät mit der Verwendung einer Druckausgleichsvorrichtung nach einem beliebigen der vorhergehenden Ansprüche.

## Revendications

1. Un dispositif pour équilibrer la différence de pression entre l'intérieur et l'extérieur d'une chambre étanche à l'air, étant donné que ladite chambre est une chambre d'entreposage frigorifique, en particulier un congélateur, ou une chambre chaude, et
ledit dispositif
- comprend des moyens d'interception (5, 6, 5a, 7a.3, 7a.4, 5b, 7b.1, 7b.3) de type unidirectionnel ou bidirectionnel,
- installé à proximité de la surface extérieure (2) d'un mur (1; 1a) de ladite chambre étanche à l'air et relié à la surface intérieure (3) de la chambre au moyen d'un conduit (7; 7b) créé dans ledit mur (1; 1a) de ladite chambre,
- et confiné entre lesdites surfaces extérieures et intérieures (2, 3) du dit mur (1; 1a)
**caractérisé par le fait qu'**il comprend aussi un ou plusieurs insert statiques (8; 8.a; 8.b)
- en isolant thermique,
- logés à l'intérieur du dit conduit (7; 7b),
- qui forment un ou plusieurs canaux (8,1, 8a.1, 8b.1) le long desquels le passage de l'air de/vers l'extérieur vers/de l'intérieur de ladite chambre est possible quand une différence de pression se vérifie entre l'intérieur et l'extérieur de ladite chambre,
- étant donné que lesdits canaux (8,1, 8a.1, 8b.1) sont formés de façon à empêcher toute transmission de chaleur vers l'extérieur de l'intérieur de ladite chambre d'entreposage frigorifique ou chambre chaude à travers ledit air quand aucune différence de pression se vérifie entre l'intérieur et l'extérieur de ladite chambre.

2. Un dispositif d'équilibrage de pression selon la revendication 1, **caractérisé par le fait que** lesdits canaux (8,1, 8a.1, 8b.1) sont :
- plus longs que l'épaisseur du mur (1, 1a) de façon à rendre insignifiante la transmission de la chaleur par conduction le long des canaux;
- et arrangés en trajets sinueux avec des sections ascendantes et descendantes adjacentes et/ou en une forme appropriée afin d'empêcher le mouvement de convection à l'intérieur des canaux.

3. Un dispositif d'équilibrage de pression selon les revendications 1 ou 2, **caractérisé par le fait que**
l'insert (8) est composé d'un tronc à vis avec un ou plusieurs pas rangés autour d'un axe droit,
ledit dispositif d'équilibrage de pression est placé à l'intérieur d'un mur latéral (1),
et ledit axe droit est orthogonal aux surfaces (2, 3) du dit mur (1).

4. Un dispositif d'équilibrage de pression selon la revendication 2, **caractérisé par le fait que** ledit insert calorifuge (8a, 8b) est composé d'un corps sur lequel les canaux sont obtenus en une forme labyrinthique (8a.1, 8b.1).

5. Un dispositif d'équilibrage de pression selon la revendication 2, **caractérisé par le fait que** ledit insert calorifuge est composé d'un ou plusieurs petits tubes, de préférence en plastique, enroulés et qui forment des canaux rangés de façon à relier la valve d'interception (5, 6) avec la surface intérieure (3) de ladite chambre.

6. Un dispositif d'équilibrage de pression selon les revendications 1 ou 2, **caractérisé par le fait que** l'effet isolant du moyen d'interception peut être créé en utilisant comme insert un matériau poreux à travers lequel l'air peut s'écouler.

7. Un dispositif d'équilibrage de pression selon n'importe quelles revendications précédentes, **caractérisé par le fait que** lesdits inserts calorifuges (8, 8a, 8b) peuvent être en mousse polystyrène.

8. Un dispositif d'équilibrage de pression selon n'importe quelles revendications précédentes, **caractérisé par le fait que** ledit insert calorifuge (8, 8a) est bien attaché par le corps de la valve (6) ou par le couvercle (6a) sur le fond (7,3., 7a.3) du conduit (7; 7b).

9. Un dispositif d'équilibrage de pression selon n'importe quelles revendications précédentes, **caractérisé par le fait que** ledit corps de la valve (6) ou couvercle (6a) est attaché au conduit (7, 7b) de manière qu'il peut être enlever, en utilisant des moyens généralement connus, comme des joints filetés, des joints à baïonnette ou des joints à enfoncer en permettant ainsi l'extraction pour le nettoyage du dit insert calorifuge (8, 8a, 8b).

10. Un congélateur qui utilise un dispositif d'équilibrage de pression selon n'importe quelles revendications précédentes.
